**Europäisches Patentamt**

**European Patent Office**

**Office européen des brevets**

(11) Publication number: **0 235 147**
**B1**

# (12) EUROPEAN PATENT SPECIFICATION

(45) Date of publication of patent specification: **05.09.90**

(21) Application number: **85906098.0**

(22) Date of filing: **20.11.85**

(86) International application number:
**PCT/SE85/00475**

(87) International publication number:
**WO 86/03112 05.06.86 Gazette 86/12**

(51) Int. Cl.⁵: **A 47 J 43/10**

### (54) A DEVICE FOR BEATING AND MIXING OF LIQUIDS AND BATTERS.

(30) Priority: **21.11.84 SE 8405858**

(43) Date of publication of application:
**09.09.87 Bulletin 87/37**

(45) Publication of the grant of the patent:
**05.09.90 Bulletin 90/36**

(84) Designated Contracting States:
**AT BE CH DE FR GB IT LI NL**

(56) References cited:
**CH-A- 379 239**
**FR-A-1 056 105**
**US-A- 664 779**
**US-A-1 967 546**

(73) Proprietor: **Persson, Göran**
**Furasgläntan 1**
**S-421 77 Västra Frölunda (SE)**

(72) Inventor: **PERSSON, Göran**
**Furasgläntan 1**
**S-421 77 Västra Frölunda (SE)**

(74) Representative: **Roth, Ernst Adolf Michael et al**
**GÖTEBORGS PATENTBYRA AB Box 5005**
**S-402 21 Göteborg (SE)**

Courier Press, Leamington Spa, England.

## Description

The present invention relates to a beating and mixing device for liquids, mixtures and batters particularly for preparing food in a bowl for large kitchens comprising two concentric, vertically disposed, rotatable shafts, one of said shafts being rigidly connected to a housing in which at least two beaters are rotatably mounted, the other shaft being arranged to give the beaters a rotary movement about their own respective axis by way of a transmission means.

From Swedish patent no. 8100670—2 (publ. no. 425,210) see also the US patent no. 4,428,680, there is known a device for mixing of liquid and paste-like substances, comprising two mixing members rotatable in opposite directions and which can be raised and lowered. The device provides an effective mixture even of paste-like foods such as mashed potatoes, porridge, stews and the like.

Previously known devices for beating and mixing of liquids, mixtures and batters for large kitchens and where one on one hand wants a rotation of the beater about its own axis and on the other hand a rotary movement thereof along the inside of the vessel, at which special transmission means are required for the movement of the beater, have a relatively complicated construction.

In FR—A—1 056 105 there is disclosed an ice-cream machine comprising a beating and mixing device according to the prior art portion of the claim. This machine comprises two concentric rotatable shafts and a housing rotatably supporting two beaters. Transmission means for rotating the beaters are arranged in the housing. The housing can together with the beaters and the vessel in which they are arranged be lifted off the shafts, thus leaving an opening in the housing which will complicate any washing procedure.

The CH—A—379.239 discloses a mixing device for granular- or powder material. It comprises two worm shafts which at their upper and lower ends are connected to support arms secured to a rotatable shaft. The worm shafts are also rotatable about their own respective axis. There is no disclosure of how removal of the mixing device from the vessel could be accomplished.

The US—A—1,967,546 discloses a stirring, kneading and mixing machine comprising a central rotatable shaft, a carrier member secured thereto and carrying two implement oblique shafts, which are rotated with the central shaft by gear wheel transmissions. Two implements are removably attached to the oblique shafts. The carrier member with the oblique shafts and the central shaft are however permanently attached to the machine.

The object of the present invention is to provide a device of the above mentioned kind, which is effective, has an uncomplicated construction, is easy to clean, and in which the transmission means for the movement of the beaters are well protected from the liquid, mixture or batter in question. This has been achieved with a device according to the prior art portion of the claim by the fact that the shafts at their upper ends are provided with connection means for releasable connection of the shafts to drive and transmission means for rotating the shafts, that said transmission means for rotating the beaters about their own axis is water-tightly encased in said housing and that the shafts, the housing with the transmission means encased therein and the beaters constitute a unit which is removable from the bowl for washing purposes or the like.

The invention will hereinafter be described more in detail with reference to an embodiment shown in the attached drawings.

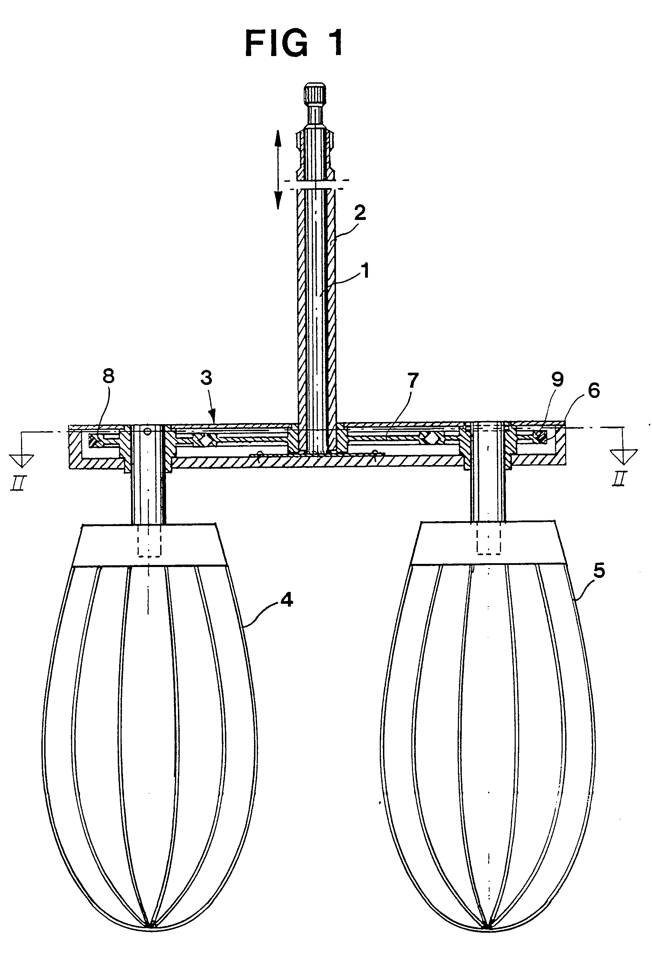

Fig. 1 is a vertical section through the device according to the invention.

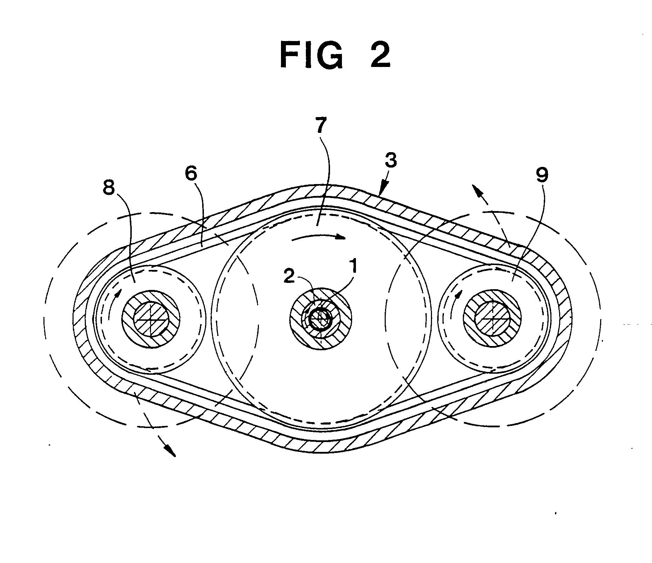

Fig. 2 is a section according to the line II—II in fig. 1.

The beating and mixing device comprises a unit intended to be easily connected to i.e. the device shown in the Swedish patent no. 8100670—2 (see also US patent no. 4,428,680) and then replace the rotating mixers thereof. The unit comprises two concentric vertical shafts 1 and 2 intended to be rotatably mounted to a cantilever (not shown) of a support, in which drive- and transmission means are arranged for rotating the shafts 1 and 2. The cantilever is vertically adjustable so that the unit can take a position above the vessel containing the liquid, batter or mixture to be mixed.

The inner shaft 1 is at the bottom rigidly connected to a housing 3, in which two beaters 4 and 5 are rotatably mounted. The outer shaft 2 is rotatably mounted in the housing 3. Inside this there is also arranged transmission means for transmitting the rotary movement of the shaft 2 to the two beaters 4 and 5. The transmission means comprises a driving belt 6, preferably a cog belt 6 laid around wheels 7, 8 and 9. Chain driving would of course also be possible. The shafts 1 and 2 are driven in opposite directions of rotation, at which the housing 3 is rotated in opposite direction with respect to the beaters 4 and 5. The unit 1—9 can during simultaneous rotation be given a vertical up- and downward movement.

The transmission means 6—9 are well protected in the housing 3, which is preferably manufactured of a plastic material. The mixed liquid or batter can therefore not penetrate into the housing 3 and damage the transmission means. The whole unit consisting of the shafts 1 and 2, the housing 3 and the beaters 4 and 5 can besides be washed in a dish washing machine.

An advantage with belt driving is that it requires no lubrication, at which possible condensate inside the housing cannot set free any oil.

The invention is not limited to the embodiment shown, but can be varied within the scope of the claim.

## Claim

A beating- and mixing device for liquids, mixtures and batters particularly for preparing food in a bowl in large kitchens comprising two concentric, vertically disposed, rotatable shafts (1, 2), one of said shafts (1) being rigidly connected to a housing (3) in which at least two beaters (4, 5) are rotatably mounted, the other shaft (2) being arranged to give the beaters (4, 5) a rotary movement about their own respective axis by way of a transmission means (6—9), characterized in that the shafts (1, 2) at their upper ends are provided with connection means for releasable connection of the shafts to drive and transmission means for rotating the shafts, that said transmission means (6—9) for rotating the beaters (4, 5) about their own axis is water-tightly encased in said housing (3) and that the shafts (1, 2), the housing (3) with the transmission means (6—9) encased therein and the beaters (4, 5) constitute a unit which is removable from the bowl for washing purposes or the like.

## Patentanspruch

Rühr- und Mischvorrichtung für Flüssigkeiten, Gemenge und Teige, insbesondere zur Bereitung von Speisen in einem Großküchenkessel, mit zwei konzentrischen, vertikal angeordneten drehbaren Wellen (1, 2), von denen eine Welle (1) starr mit einem Gehäuse (3) verbunden ist, in welchem mindestens zwei Rührwerkzeuge (4, 5) drehbar montiert sind, und die andere Welle (2) so angeordnet ist, daß sie die Rührwerkzeuge (4, 5) über ein Getriebe (6 bis 9) in eine Drehbewegung um deren jeweils eigene Achse versetzt, dadurch gekennzeichnet, daß die Wellen (1, 2) an ihren oberen Enden mit Mitteln zur lösbaren Verbindung der Wellen mit einer Antriebs- und Getriebeeinrichtung für den Drehantrieb der Wellen ausgestattet sind, daß das genannte Getriebe (6 bis 9) für den Drehantrieb der Rührwerkzeuge (4, 5) um deren eigene Achse wasserdicht in dem Gehäuse (3) eingeschlossen ist und daß die Wellen (1, 2), das Gehäuse (3) mit dem darin eingeschlossenen Getriebe (6 bis 9) und die Rührwerkzeuge (4, 5) eine von dem Kessel zu Reinigungswecken od.gdl. abnehmbare Einheit bilden.

## Revendication

Dispositif pour battre ou mélanger des liquides, des mélanges, et des pâtes lisses, notamment pour préparer la nourriture dans un bol dans de grandes cuisines, comprenant deux arbres tournants (1, 2) montés verticaux et concentriques, l'un (1) desdits arbres étant fixé rigidement à un carter (3) dans lequel au moins deux batteurs (4, 5) sont montés en rotation, l'autre arbre (2) étant agencé pour donner aux batteurs (4, 5) un mouvement de rotation autour de leurs axes propres respectifs, grâce à des moyens de transmission (6—9), caractérisé en ce que, les arbres (1, 2) sont pourvus à leurs extrémités supérieures de moyens de connexion permettant une connexion amovible des arbres aux moyens d'entraînement et de transmission destinés à faire tourner les arbres, en ce que lesdits moyens de transmission (6—9) destinés à faire tourner les batteurs (4, 5) autour de leurs axes propres sont enfermés de manière étanche à l'eau dans ledit carter (3), et en ce que les arbres (1, 2), le carter (3) contenant les moyens de transmission (6—9) enfermés et les batteurs (4, 5) constituent une unité qui peut être retirée du bol en vue d'un lavage ou analogue.

# FIG 1

# FIG 2